# EUROPEAN PATENT APPLICATION

(11) **EP 3 940 514 A1**
(43) Date of publication of application: **19.01.2022**
(21) Application number: 20878021.3
(22) Date of filing: 12.05.2020
(51) Int. Cl.: G06F 3/041, G06K 9/00

(54) **ELECTRONIC DEVICE, SIGNAL ACQUISITION METHOD, AND COMPUTER-READABLE STORAGE MEDIUM**

(71) Applicant: Beijing Xiaomi Mobile Software Co., Ltd. Nanjing Branch, Jianye District Nanjing Jiangsu 210019 (CN)
(72) Inventor: CHENG, Chih-jen, Beijing 100085 (CN)
(74) Representative: dompatent von Kreisler Selting Werner - Partnerschaft von Patent- und Rechtsanwälten mbB
(86) International application number: PCT/CN2020/087627
(87) International publication number: WO 2021/226734

(57) **Abstract**

The present disclosure provides an electronic device, a signal acquiring method, and a computer-readable storage medium. The electronic device includes a fingerprint sensing layer including a plurality of columns of fingerprint pixel circuits, a touch layer including a plurality of columns of touch electrodes, a signal reading module including a plurality of common reading circuits, wherein, each of the common reading circuits is connected to at least one column of the touch electrodes and at least one column of the fingerprint pixel circuit and a control module configured to control the common reading circuits to be communicated with either the fingerprint pixel circuits or the touch electrodes at a timing; when the common reading circuit is communicated with the touch electrodes, acquire a touch signal which is collected by the touch electrodes and read by the common reading circuit; and when the common reading circuit is communicated with the fingerprint pixel circuits, acquire a fingerprint signal which is collected by the fingerprint pixel circuits and read by the common reading circuit. The size of the signal reading module can be made small, the cost can be reduced, and the integration of electronic device can be improved.

## Description

### TECHNICAL FIELD

The present disclosure relates to the technical field of electronic devices, and in particular to electronic devices and methods of acquiring signal and computer-readable storage mediums.

### BACKGROUND

With development of full-screen technology, under-screen fingerprint technology has become the main development trend for fingerprint detection. The under-screen fingerprint technology refers to that a fingerprint sensing layer of an electronic device is disposed under a touch layer. At present, full-screen fingerprint detection of electronic devices has become popular. However, since resolution of the fingerprint sensing layer is relatively higher, if the fingerprint sensing layer is made in an increased size, more wires are required to connect the chip to the fingerprint sensing layer, which may increase the size and price of the chip, and may be not beneficial to improving the integration of electronic devices.

### SUMMARY

The present disclosure provides an improved electronic device, a control method thereof, and a computer-readable storage medium.

One aspect of the present disclosure provides an electronic device, including: a fingerprint sensing layer including a plurality of columns of fingerprint pixel circuits; a touch layer including a plurality of columns of touch electrodes; a signal reading module including a plurality of common reading circuits, wherein, each of the common reading circuits is connected to at least one column of the touch electrodes and at least one column of the fingerprint pixel circuits; and a control module configured to control the common reading circuits to be communicated with either the fingerprint pixel circuits or the touch electrodes at a timing; when the common reading circuit is communicated with the touch electrodes, acquire a touch signal which is collected by the touch electrodes and read by the common reading circuit; and when the common reading circuit is communicated with the fingerprint pixel circuits, acquire a fingerprint signal which is collected by the fingerprint pixel circuits and read by the common reading circuit.

Optionally, the electronic device further includes: a switch module connected to the touch electrodes, the fingerprint pixel circuits, and the common reading circuits; wherein the control module is configured to control the switch module to communicate the common reading circuits with the touch electrodes but not the fingerprint pixel circuits; or control the switch module to communicate the common reading circuits with the fingerprint pixel circuits but not the touch electrodes.

Optionally, the switch module includes a plurality of first switch units, and each of the first switch units includes a first connection terminal connected to one of the touch electrodes, a second connection terminal connected to one of the fingerprint pixel circuits, and a third connection terminal connected to one of the common reading circuits; the control module is configured to control the third connection terminal to be connected with one of the first connection terminal and the second connection terminal and disconnected with another of the first connection terminal and the second connection terminal.

Optionally, the first switch unit is integrated with the signal reading module.

Optionally, the switch module includes a second switch circuit connected between the fingerprint pixel circuits and the common reading circuits, and a third switch circuit connected between the touch electrodes and the common reading circuits; the control module is configured to control the third switch circuit to communicate the common read circuits with the touch electrodes, but the second switch circuit to not communicate the common read circuit with the fingerprint pixel circuits; or control the third switch circuit to not communicate the common reading circuit with the touch electrodes, but the second switch circuit to communicate the common reading circuit with the fingerprint pixel circuits.

Optionally, the fingerprint sensing layer includes a plurality of column fingerprint pixel areas, a plurality of horizontal wires and a plurality of vertical wires, the second switch circuit includes a plurality of second switch units; for each of the column fingerprint pixel areas, the column fingerprint pixel area includes a plurality of columns of fingerprint pixel circuits, and each of the columns of fingerprint pixel circuits is connected to one of the horizontal wires through one of the second switch units, for a group including at least two of the column fingerprint pixel areas, one column of the fingerprint pixel circuits in every column fingerprint pixel areas within the group are connected to a same one of the horizontal wires, and each of the horizontal wires is connected to the common reading circuits through one of the vertical wires.

Optionally, the fingerprint sensing layer further includes a plurality of row fingerprint pixel areas, each of the row fingerprint pixel areas includes a plurality of rows of fingerprint pixel circuits, and the control module is further configured to send a driving signal to each of the rows of fingerprint pixel circuits in one or more of the row fingerprint pixel areas which correspond to a fingerprint detection area determined based on the touch signals; and/or, a number of the column fingerprint pixel areas is equal to a number of the second switch circuits, each of the column fingerprint pixel areas is connected to the common reading circuit through one of the second switch circuits, and the control module is configured to control the second switch circuit to communicate each of the columns of fingerprint pixel circuits in one or more of the column fingerprint pixel areas which correspond to the fingerprint detection area with the common reading circuit, wherein the fingerprint detection area is determined based on the touch signals.

Optionally, the second switch circuit and the signal reading module are separately provided; and/or, the third switch circuit and the signal reading module are separately provided.

Optionally, another aspect of the present disclosure provides a signal acquiring method, applied in an electronic device, the electronic device including: a fingerprint sensing layer, a touch layer, and a signal reading module; the touch layer including a plurality of columns of touch electrodes; the fingerprint sensing layer including a plurality of columns of fingerprint pixel circuits; the signal reading module including a plurality of common reading circuits, wherein, each of the common reading circuits is connected to at least one column of the touch electrodes and at least one column of the fingerprint pixel circuits, and the method including: controlling the common reading circuits to be communicated with either the fingerprint pixel circuits or the touch electrodes at a timing; and when the common reading circuit is communicated with the touch electrodes, acquire a touch signal which is collected by the touch electrodes and read by the common reading circuit; and when the common reading circuit is communicated with the fingerprint pixel circuits, acquire a fingerprint signal which is collected by the fingerprint pixel circuits and read by the common reading circuit.

Optionally, the electronic device further includes: a switch module connected to the touch electrodes, the fingerprint pixel circuits, and the common reading circuits; and controlling the common reading circuit to be communicated with either the fingerprint pixel circuits or the touch electrodes at a timing includes: controlling the switch module to communicate the common reading circuits with the touch electrodes but not the fingerprint pixel circuits; or controlling the switch module to communicate the common reading circuits with the fingerprint pixel circuits but not the touch electrodes.

Optionally, the switch module includes a plurality of first switch units, and each of the first switch units includes a first connection terminal connected to one of the touch electrodes, a second connection terminal connected to one of the fingerprint pixel circuits, and a third connection terminal connected to one of the common reading circuits; and controlling the common reading circuit to be communicated with either the fingerprint pixel circuits or the touch electrodes at a timing includes: controlling the third connection terminal to be connected with one of the first connection terminal and the second connection terminal, and disconnected with another of the first connection terminal and the second connection terminal.

Optionally, the switch module includes a second switch circuit connected between the fingerprint pixel circuits and the common reading circuits, and a third switch circuit connected between the touch electrodes and the common reading circuits; and controlling the common reading circuit to be communicated with either the fingerprint pixel circuits or the touch electrodes at a timing includes: controlling the third switch circuit to connect the common read circuits to the touch electrodes, but the second switch circuit to disconnect the common read circuit from the fingerprint pixel circuits; or controlling the third switch circuit to disconnect the common reading circuit from the touch electrodes, but the second switch circuit to connect the common reading circuit to the fingerprint pixel circuits.

Optionally, the fingerprint sensing layer further includes a plurality of row fingerprint pixel areas, each group of the row fingerprint pixel areas includes a plurality of rows of fingerprint pixel circuits, and the method further includes: sending a driving signal to each of the rows of fingerprint pixel circuits in one or more of the row fingerprint pixel areas which correspond to a fingerprint detection area determined based on the touch signals; and/or, the fingerprint sensing layer includes a plurality of column fingerprint pixel areas, each of the column fingerprint pixel areas is connected to the common reading circuit through one of the second switch circuits, and controlling the common reading circuit to be communicated with either the fingerprint pixel circuits or the touch electrodes at a timing includes: controlling the second switch circuit to communicate each of the columns of fingerprint pixel circuits in one or more of the column fingerprint pixel areas which correspond to the fingerprint detection area with the common reading circuit, wherein the fingerprint detection area is determined based on the touch signals.

Optionally, after acquiring the touch signals collected by the touch electrodes and read by the common reading circuit, the method further includes: in response to the fingerprint detection instruction, the electronic device entering a fingerprint detection ready mode.

Optionally, after acquiring the touch signal collected by the touch electrode and read by the common reading circuit, the method further includes: determining the fingerprint detection area according to the touch signals.

The electronic device further includes a light emitting element, and after controlling the switch module to disconnect the common reading circuit from the touch electrodes, and controlling the switch module to connect the common reading circuit to the fingerprint pixel circuits, the method further includes: controlling a light emitting element to emit light to the fingerprint detection area to expose the fingerprint pixel circuits corresponding to a fingerprint detection area.

After acquiring the fingerprint signals collected by the fingerprint pixel circuits and read by the common reading circuit, the method further includes: controlling the switch module to communicate the common reading circuit with the touch electrodes but not the fingerprint pixel circuits.

Another aspect of the present disclosure provides an electronic device, including: a fingerprint sensing layer including a plurality of columns of fingerprint pixel circuits; a touch layer including a plurality of columns of touch electrodes; a signal reading module including a plurality of common reading circuits, wherein, each of the common reading circuits is connected to at least one column of the touch electrodes and at least one column of the fingerprint pixel circuits; and one or more processors and memories, the memory storing a program that can be invoked by the processors; wherein when the processors execute the program, the processors implement the method according to any one of the above.

Another aspect of the present disclosure provides a computer-readable storage medium having a program stored thereon, and when a processor executes the program, the processor implements the method according to any one of the above.

In the present disclosure, at least one column of touch electrodes and at least one column of fingerprint pixel circuits are connected to a same common reading circuit, and a control module controls the common reading circuit to communicate with either the touch electrodes or the fingerprint pixel circuits at a timing, so that touch signals collected by the touch electrodes or fingerprint signals collected by the fingerprint pixel circuits can be read. In this way, even when the fingerprint sensing layer is made in an increased size, the number of reading circuits, the size of the signal reading module and the cost of the signal reading module can be reduced, and thus the integration of electronic device can be improved. Moreover, based on the common reading circuit collecting fingerprint signals and touch signals at different timing, interference between the fingerprint signals and the touch signals can be effectively avoid.

### BRIEF DESCRIPTION OF THE DRAWINGS

In order to more clearly describe the technical solutions in the embodiments of the present disclosure, the following will briefly introduce the drawings referred in the description of the embodiments. Apparently, the drawings in the following description are only some embodiments of the present disclosure. For those ordinary skilled in the art, other drawings can be obtained based on these drawings without creative efforts.
FIG. 1 is a schematic diagram showing connection of a fingerprint sensing layer, a touch layer, a first chip and a second chip according to an exemplary embodiment.
FIG. 2 is a schematic diagram showing connection of a fingerprint sensing layer, a touch layer, a reading module, and a control module according to an exemplary embodiment of the present disclosure.
FIG. 3 is a schematic diagram of a column of passive fingerprint pixel circuits according to an exemplary embodiment of the present disclosure.
FIG. 4 is a schematic diagram of a column of active fingerprint pixel circuits according to an exemplary embodiment of the present disclosure.
FIG. 5 is an equivalent circuit diagram showing connection of a common reading circuit, a receiving electrode, and a fingerprint pixel circuit according to an exemplary embodiment of the present disclosure.
FIG. 6 is an equivalent circuit diagram of a reading circuit and a fingerprint pixel circuit shown in an exemplary embodiment.
FIG. 7 is an equivalent circuit diagram of a reading circuit and a touch electrode according to an exemplary embodiment.
FIG. 8 is a schematic diagram showing connection between a fingerprint sensing layer and a signal reading module according to an exemplary embodiment of the present disclosure.
FIG. 9 is a schematic diagram showing connection between a touch layer and a signal reading module according to an exemplary embodiment of the present disclosure.
FIG. 10 is a schematic structural diagram of a second switch circuit according to an exemplary embodiment of the present disclosure.
FIG. 11 is a block diagram of a signal acquiring method according to an exemplary embodiment of the present disclosure.
FIG. 12 is a block diagram of a signal acquiring method according to an exemplary embodiment of the present disclosure.
FIG. 13 is a block diagram of an electronic device according to an exemplary embodiment of the present disclosure.

### DETAILED DESCRIPTION OF THE EMBODIMENTS

The technical solutions in the embodiments of the present disclosure will be clearly and fully described below in conjunction with the accompanying drawings in the embodiments of the present disclosure. Apparently, the described embodiments are only a part of the embodiments of the present disclosure, rather than all of the embodiments. Based on the embodiments of the present disclosure, all other embodiments obtained by those of ordinary skill in the art without creative efforts shall fall within the protection scope of the present disclosure.

Here, exemplary embodiments will be described in detail, and examples thereof are shown in the accompanying drawings. When the following descriptions involve the drawings, similar numerals in different drawings refer to like or similar elements unless otherwise indicated. The examples described in the following examples do not represent all examples consistent with the present disclosure. Rather, they are merely examples of apparatuses and methods consistent with some aspects of the present disclosure as detailed in the appended claims.

The terms used in the present disclosure are only for the purpose of describing specific embodiments, and are not intended to limit the present disclosure. The singular forms "a", "an" and "the" used in the present disclosure and appended claims are also intended to include plural forms, unless the context clearly indicates other meanings. It should also be understood that the term "and/or" used herein refers to and includes any or all possible combinations of one or more associated listed items. Unless otherwise indicated, similar words such as "front", "rear", "lower" and/or "upper" are only for convenience of description, and are not limited to one position or one spatial orientation. Similar words such as "connected" or "coupled" are not limited to physical or mechanical connections, and may include electrical connections, whether direct or indirect. Similar words such as "multiple" or "several" mean two or more.

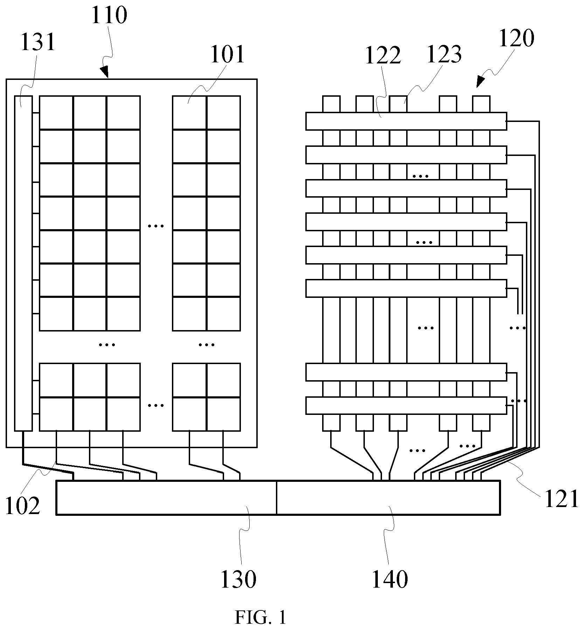

FIG. 1 is a schematic diagram showing connection of a fingerprint sensing layer, a touch layer, a first chip and a second chip according to an exemplary embodiment. Referring to FIG. 1, the electronic device includes a fingerprint sensing layer 110, a touch layer 120, a first chip 130 and a second chip 140. The fingerprint sensing layer 110 includes a plurality of fingerprint pixel circuits arranged in an array including a plurality of rows and a plurality of columns and each of the junctions of the plurality of rows and the plurality of columns indicates one of the fingerprint pixel circuits 101. Each row of fingerprint pixel circuits 101 is connected to a driving unit 131 of a first chip 130 through a first wire 102, and each column of fingerprint pixel circuits 101 is connected to the fist chip 130 through the first wire 102. The driving unit 131 is configured to send a driving signal to each row of fingerprint pixel circuits 101 to drive each column of fingerprint pixel circuits 101 to output a fingerprint signal, and the first chip 130 acquires a fingerprint signal output by each column of fingerprint pixel circuits 101.

The touch layer 120 includes a plurality of touch electrodes which are arranged in an array including a plurality of rows and a plurality of columns and connected to a second chip 140 through a second wire 121. Each row of the touch electrodes can be used as an emitting electrode 122, and each column of the touch electrodes can be used as a receiving electrode 123. When a finger presses on the touch layer 120, an electrical signal between the transmitting electrode 122 and the receiving electrode 123 corresponding to the pressed area will change. The second chip 140 can acquire the changed electrical signal from the receiving electrode 123, and the changed electrical signal can be used as a touch signal.

The first chip 130 and the second chip 140 can be integrated or separated. However, if the fingerprint sensing layer 110 has an increased size, since the resolution of the fingerprint sensing layer 110 is higher than that of the touch layer 120, and each row of the fingerprint pixel circuits and each column of the fingerprint pixel circuits within the fingerprint sensing layer 110 are respectively connected to the first chip 130 via the first wire 102, as a number of the first wires 102 increases, the first chip 130 has to be made in an increased size to be fit with the number of the first wires 102. However, this will increase the cost of the first chip 130, and is not beneficial to improving the integration of electronic devices.

In view of the above defects, embodiments of the present disclosure provide an electronic device and a signal acquiring method, which are described in detail below with reference to the accompanying drawings.

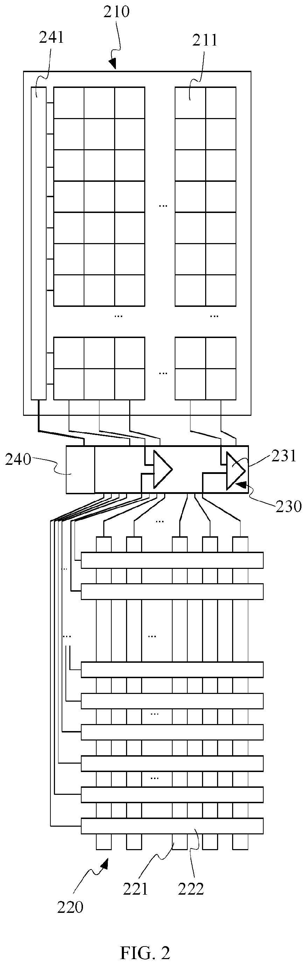

FIG. 2 is a schematic diagram showing connection of a fingerprint sensing layer, a touch layer, a reading module, and a control module according to an exemplary embodiment of the present disclosure. In some embodiments, referring to FIG. 2, the electronic device includes a fingerprint sensing layer 210, a touch layer 220, a signal reading module 230 and a control module 240.

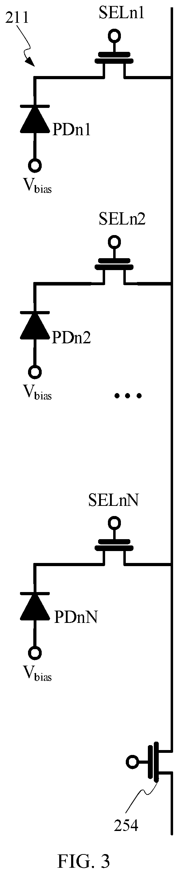

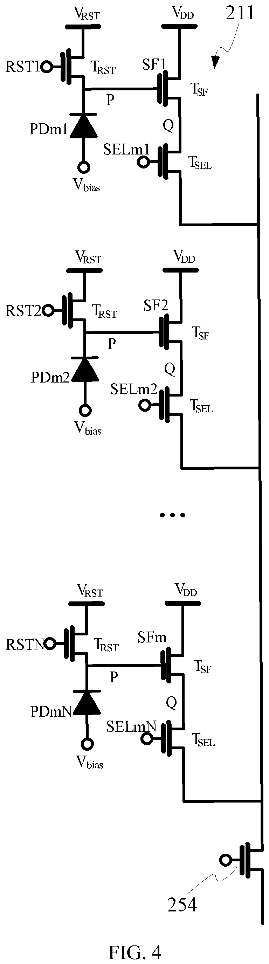

The fingerprint sensing layer 210 includes a plurality of columns of fingerprint pixel circuits 211. Each column of fingerprint pixel circuits 211 is configured to output collected fingerprint signal. As an example, the fingerprint pixel circuits 211 are optical fingerprint pixel circuits 211. FIG. 3 is a schematic diagram of a column of passive fingerprint pixel circuits according to an exemplary embodiment of the present disclosure. As an example, referring to FIG. 3, the fingerprint pixel circuits 211 in this column are passive fingerprint pixel circuits, and each of the passive fingerprint pixel circuits has the same structure. Take the passive fingerprint pixel circuit at the top in FIG. 3 as an example, the passive fingerprint pixel circuit includes a first photodiode PDn1 and a first gate transistor SELn1 connected to the first photodiode PD1. The first photodiode PDn1 accumulates optical signals during exposure and converts the optical signals into an electrical signal. By controlling the first gate transistor SELn1 to be turned on, the first photodiode PDn1 outputs an electrical signal, that is, a fingerprint signal, to the signal reading module 230. FIG. 4 is a schematic diagram of a column of active fingerprint pixel circuits according to an exemplary embodiment of the present disclosure. As an example, referring to FIG. 4, the fingerprint pixel circuits 211 in this column are active fingerprint pixel circuits, and each of the active fingerprint pixel circuits has the same structure. Take the active fingerprint pixel circuit at the top in FIG. 4 as an example, the active fingerprint pixel circuit includes a second photodiode PDml, a reset transistor RST1, a source follower transistor SF1, and a second gate transistor SELm1. The second photodiode PDml is connected to the reset transistor RST1, one end of the source follower transistor SF1 is connected between the reset transistor RST and the second photodiode PDml and the other end is connected to the second gate transistor SELm1. The second photodiode PDml accumulates optical signals during exposure and converts the optical signals into an electrical signal. By controlling the second gate transistor SELm1 to be turned on, the electrical signal of the second photodiode PDml is output to the signal reading module 230 through the source follower transistor SF1. That is, the signal reading module 230 acquires the fingerprint signal.

Still referring to FIG. 2, the touch layer 220 includes a plurality of columns of touch electrodes 221. As an example, the touch layer 220 can further include a plurality of rows of touch electrodes 222, and the plurality of rows of touch electrodes 222 and the plurality of columns of touch electrodes 221 can cooperate to collect a touch signal. As an example, each column of touch electrodes 221 are receiving electrodes, and each row of touch electrodes 222 are transmitting electrodes. The electrical signal between the receiving electrode and the transmitting electrode is stable. When a finger presses on the touch layer 220, the capacitance between at least one row of touch electrodes 222 and at least one column of touch electrodes 221 corresponding to the pressed area will change, and the at least one row of touch electrodes 221 outputs the changed electrical signals as a touch signal. For ease of description, the present disclosure takes that the touch signal is output by each column of touch electrodes 221 as an example for illustration. The "touch electrode" mentioned in the following can be regarded as the touch electrode 221 unless explicitly stated.

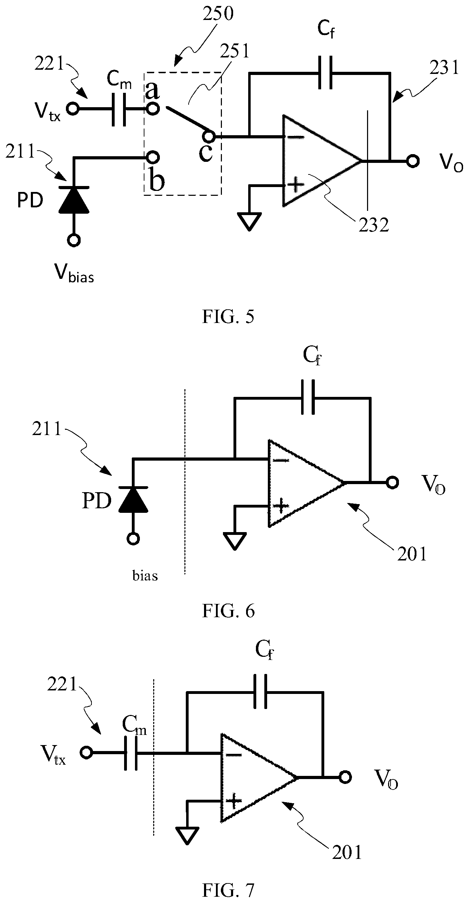

FIG. 5 is an equivalent circuit diagram showing connection of a common reading circuit 231, a receiving electrode, and a fingerprint pixel circuit 211 according to an exemplary embodiment of the present disclosure. The signal reading module 230 includes a plurality of common reading circuits 231. With reference to FIGS. 2 and 5 together, at least one column of touch electrodes 221 and at least one column of fingerprint pixel circuits 211 are connected to the same common reading circuit 231. It should be understood that the same common reading circuit 231 reads touch signals collected by the at least one column of touch electrodes 221 and fingerprint signals collected by the at least one column of fingerprint pixel circuits 211, respectively. As such, when the fingerprint sensing layer 210 is made in an increased size, the number of reading circuits can be reduced, so that the size of the signal reading module 230 can be reduced, the cost of the signal reading module 230 can be lowered, and the integration of electronic device can be improved. As an example, one common reading circuit 231 is connected to one column of touch electrodes 221 and one column of fingerprint pixel circuits 211.

FIG. 6 is an equivalent circuit diagram of a reading circuit 201 and a fingerprint pixel circuit 211 according to an exemplary embodiment, and FIG. 7 is an equivalent circuit diagram of a reading circuit 201 and a touch electrode 221 according to an exemplary embodiment. The structure of the reading circuit 201 in FIG. 6 is the same as that of the reading circuit 201 in FIG. 7. Therefore, the touch electrode 221 and the fingerprint pixel circuit 211 can share a reading circuit 201, and the reading circuit 201 connected to the touch electrode 221 and the fingerprint pixel circuit 211 is referred to as a common reading circuit 231. As an example, still referring to FIG. 5, the common reading circuit 231 includes an operational amplifier 232 and a feedback capacitor C_{f} connected to the negative input terminal and the output terminal of the operational amplifier 232. The common reading circuit 231 can amplify the acquired touch signal or fingerprint signal and send the amplified signal to the control module 240. As an example, the resolution of the fingerprint sensing layer 210 is higher than the resolution of the touch layer 220, and the number of columns of the fingerprint pixel circuits 211 is more than the number of columns of the touch electrodes 221. Therefore, the number of reading circuits can be set based on the number of columns of the fingerprint pixel circuits 211. The plurality of reading circuits include a first reading circuit and a second reading circuit. The first reading circuit indicates the common reading circuits 231, and the second reading circuit indicates a reading circuit connected to the fingerprint pixel circuit 211 but not the touch electrode.

The control module 240 is configured to control the common reading circuit 231 to be communicated with either the fingerprint pixel circuit 211 or the touch electrode 221 at a timing. When the common reading circuit 231 is communicated with the touch electrode 221, the touch signal collected by the touch electrode 221 and read by the common reading circuit 231 is acquired. When the common reading circuit 231 is communicated with the fingerprint pixel circuit 211, the fingerprint signal collected by the fingerprint pixel circuit 211 and read by the common reading circuit 231 is acquired. It should be understood that when the common reading circuit 231 collects fingerprint signals, no touch signals are collected. When the common reading circuit 231 collects touch signals, no fingerprint signals are collected. In other words, the common reading circuit 231 collects fingerprint signals and touch signals in a time-division manner.

As an example, at least part of the signal reading module 230 and at least part of the control module 240 are integrated into one chip, so as to reduce the footprint size. For example, referring to FIG. 2, the control module 240 includes a driving unit 241 connected to the fingerprint pixel circuits 211 in a plurality of rows for sending driving signals to the fingerprint pixel circuits 211. As an example, the signal reading module 230 and the control module 240 separately form two chips for the convenience of the replacement for the signal reading module 230 or the control module 240.

In view of the above, by connecting at least one column of the touch electrodes 221 and at least one column of the fingerprint pixel circuits 211 to a same common reading circuit 231, and controlling, by the control module 240, the common reading circuit 231 to be communicated with either the touch electrodes 221 or the fingerprint pixel circuits 211 at a timing, to read the touch signals collected by the touch electrodes 221 or the fingerprint signal collected by the fingerprint pixel circuits 211, so that when the fingerprint sensing layer 210 is made in an increased size, the number of reading circuits can be reduced, and the size of the signal reading module 230 can be reduced, the cost of the signal reading module 230 can be lowered, and the integration of electronic device can be improved. In addition, the fingerprint signals and the touch signals are not collected at the same time based on the common reading circuit 231, interference between the fingerprint signals and the touch signals can be effectively avoid, and the accuracy of the control module 240 to acquire the fingerprint signals or the touch signals can be improved.

In order to have a clearer understanding of the electronic device provided by the embodiments of the present disclosure, a more detailed explanation is given below in conjunction with the accompanying drawings:
In some embodiments, still referring to FIG. 5, the electronic device further includes: a switch module 250 connected to the touch electrodes 221, the fingerprint pixel circuit 211, and the common reading circuit 231. The control module 240 is configured to control the switch module 250 to communicate the common reading circuit 231 with the touch electrodes 221 but not the fingerprint pixel circuits 211; or control the switch module 250 to communicate the common reading circuit 231 with the fingerprint pixel circuits 211 but not the touch electrodes 221. In some embodiments, with the switch module 250, the common reading circuit 231 can be more easily controlled to be communicated with either the fingerprint pixel circuits 211 or the touch electrodes 221 at a timing, and when the switch module 250 is controlled to communicate the common reading circuit 231 with the touch electrodes 221 but not the fingerprint pixel circuits 211, the fingerprint signal interfering with the touch signals read by the common reading circuit 231 can be effectively prevented. When the switch module 250 is controlled to communicate the common reading circuit 231 with the fingerprint pixel circuits 211 but not the touch electrodes 221, the touch signals interfering with the fingerprint signals read by the common reading circuit 231 can be effectively prevented.

Two embodiments for the switch module 250 will be given below in conjunction with the drawings.

In the first embodiment, the switch module 250 includes a plurality of first switch units 251, still referring to FIG. 5, each first switch unit 251 includes a first connection terminal *a*, a second connection terminal *b,* and a third connection terminal c. The first connection terminal *a* is connected to the touch electrode 221, the second connection terminal b is connected to the fingerprint pixel circuit 211, and the third connection terminal c is connected to the common reading circuit 231. The control module 240 is configured to: control one of the first connection terminal *a* and the second connection terminal *b* to be connected to the third connection terminal c, and control the other one of the first connection terminal *a* and the second connection terminal *b* to be disconnected from the third connection terminal c. In some embodiments, the control module 240 controls the first connection terminal *a* to be connected to the third connection terminal c, and the second connection terminal b to be disconnected from the third connection terminal c, that is, to make the common reading circuit 231 to be communicated with the touch electrodes 221 but not the fingerprint pixel circuits 211 , and the control module 240 acquires the touch signals collected by the touch electrodes 221 and read by the common reading circuit 231. In other embodiments, the control module 240 controls the first connection terminal *a* to be disconnected from the third connection terminal c, and the second connection terminal b to be connected to the third connection terminal c, that is, to make the common reading circuit 231 to be communicated with the fingerprint pixel circuits 211 but not the touch electrodes 221 , and the control module 240 acquires the fingerprint signal collected by the fingerprint pixel circuit 211 and read by the fingerprint pixel circuit 211. As an example, a first switch unit 251 is connected to a column of the fingerprint pixel circuits 211, a column of the touch electrodes 221, and a common reading circuit 231 in a one-to-one correspondence.

In some cases, still referring to FIG. 5, after the first connection terminal *a* is connected to the third connection terminal c, the touch electrodes 221 are communicated with the common reading circuit 231. In the touch layer 220, the touch electrodes 222 in each row emit electrical signals, the touch electrodes 221 in each column receive the electrical signals, and a capacitance Cm is formed at an intersection between each row of the touch electrodes 222 and each column of the touch electrodes 221. Upon a finger pressing, an electrical signal at Cm changes, and the changed electrical signal, that is, the touch signal, is acquired by the common reading circuit 231. After the second connection terminal b is connected to the third connection terminal c, the fingerprint pixel circuits 211 are communicated with the common reading circuit 231. The photodiode PD outputs the electrical signal converted from an optical signal to the common reading circuit 231, and the electrical signal is used as a fingerprint signal.

In the above embodiment, the first switch unit 251 and the signal reading module 230 can be integrated. In this way, it is beneficial to reducing the footprint size of the first switch unit 251 and the signal reading module 230, and is beneficial to improving the integration of the electronic device.

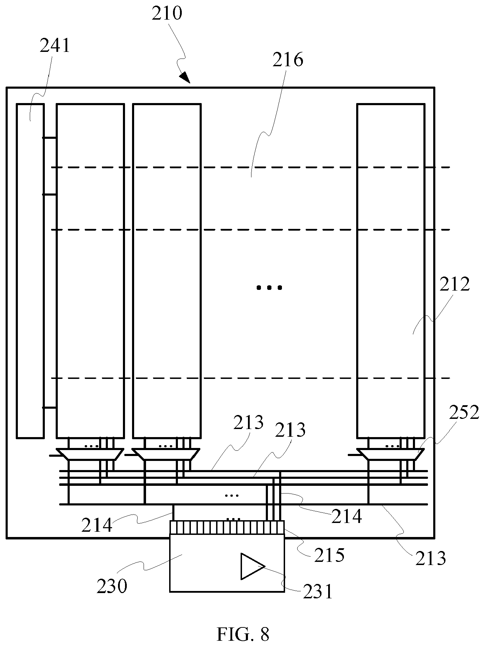

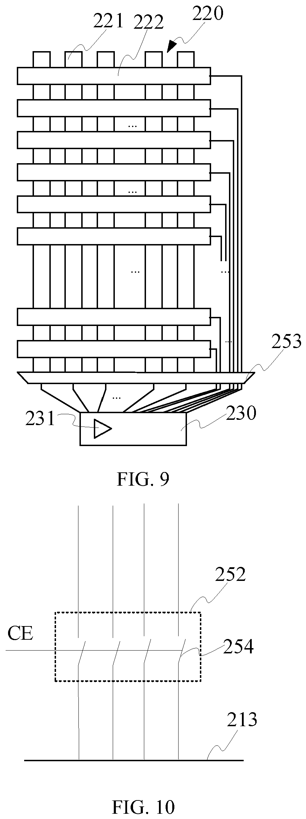

FIG. 8 is a schematic diagram showing connection between a fingerprint sensing layer 210 and a signal reading module 230 according to an exemplary embodiment of the present disclosure. FIG. 9 is a schematic diagram showing connection between a touch layer 220 and a signal reading module 230 according to an exemplary embodiment of the present disclosure. In the second embodiment, referring to FIGS. 8 and 9 together, the switch module 250 includes a second switch circuit 252 and a third switch circuit 253. The second switch circuit 252 is connected between the fingerprint pixel circuit 211 and the common reading circuit 231, and the third switch circuit 253 is connected between the touch electrodes 221 and the common reading circuit 231. The control module 240 is configured to control the third switch circuit 253 to communicate the common reading circuit 231 with the touch electrodes 221, and control the second switch circuit 252 to not communicate the common reading circuit 231 with the fingerprint pixel circuits 211; or control the third switch circuit 253 to not communicate the common reading circuit 231 with the touch electrodes 221, and control the second switch circuit 252 to communicate the common reading circuit 231 with the fingerprint pixel circuits 211.

In some embodiments, the second switch circuit 252 and the signal reading module 230 are separately provided; and/or, the third switch circuit 253 and the signal reading module 230 are separately provided. In this way, it is beneficial to reducing the improvement process of the circuit of the signal reading module 230, reducing the cost of the signal reading module 230, and it is easy to dispose the second switch circuit 252 between the fingerprint sensing layer 210 and the common reading circuit 231, and the third switch circuit 253 between the touch electrodes 221 and the common reading circuit 231.

FIG. 10 is a schematic structural diagram of a second switch circuit 252 according to an exemplary embodiment of the present disclosure. In some embodiments, referring to FIGS. 8 and 10 together, the fingerprint sensing layer 210 includes a plurality of column fingerprint pixel areas 212, a plurality of horizontal wires 213, and a plurality of vertical wires 214, and the second switch circuit 252 includes a plurality of second switch units 254. Each of the column fingerprint pixel areas 212 includes a plurality of columns of the fingerprint pixel circuits 211, and each of the columns of fingerprint pixel circuits 211 is connected to one of the horizontal wires 213 through one of the second switch units 254. For a group including at least two of the column fingerprint pixel areas, one column of the fingerprint pixel circuits 211 in every column fingerprint pixel areas 212 within the group are connected to a same one of the horizontal wires 213, and each horizontal wire 213 is connected to the common reading circuit 231 through one of the vertical wires 214. In some embodiments, based on the fact that one column of the fingerprint pixel circuits 211 in each of the at least two of the column fingerprint pixel areas 212 are connected to the same one of the horizontal wires 213, and each horizontal wire 213 is connected to the common reading circuit 231 through one of the vertical wires 214, instead of providing a horizontal wire 213 and a vertical wire 214 for each column of the fingerprint pixel circuits 211, respectively, the number of horizontal wires 213 and vertical wires 214 can be reduced, which may be beneficial to reducing the size of the fingerprint sensing layer 210. Each column of the fingerprint pixel circuits 211 in each column fingerprint pixel area 212 is connected to a horizontal wire 213, and each horizontal wire 213 is connected to the common reading circuit 231 through a vertical wire 214, so that the common reading circuit 231 can read the fingerprint signals collected by each of the columns of fingerprint pixel circuits 211.

In order to understand more clearly how the number of horizontal wires 231 and the vertical wires 214 is reduced, the present disclosure provides the following detailed examples.

As an example, the plurality of groups of column fingerprint pixel areas 212 include: a first column fingerprint pixel area, a second column fingerprint pixel area, ..., an Nth column fingerprint pixel area, and a column of fingerprint pixel circuits 211 in the first column fingerprint pixel area, a column of fingerprint pixel circuits 211 in the second column fingerprint pixel area,..., and a column of fingerprint pixel circuits 211 in the Nth column fingerprint pixel area can be connected to a same one of the horizontal wires 213. This can avoid providing one horizontal wire 213 and one vertical wire 214 for each column of the fingerprint pixel circuits 211, respectively, which is beneficial to reducing the size of the fingerprint sensing layer 210.

Further, as an example, a number of the columns of fingerprint pixel circuits 211 in each of the column fingerprint pixel areas 212 is the same, and a number of the columns of fingerprint pixel circuits 211 in each of the column fingerprint pixel areas 212 is equal to a number of the horizontal wires 213. The horizontal wires 213 include a first horizontal wire, a second horizontal wire, ..., an Mth horizontal wire. Each group of the column fingerprint pixel areas 212 includes a first column of fingerprint pixel circuits, a second column of fingerprint pixel circuits, ..., an Mth column of fingerprint pixel circuits. The first column of fingerprint pixel circuits in the first column fingerprint pixel area, the first column of fingerprint pixel circuits in the second column fingerprint pixel area,..., and the first column of fingerprint pixel circuits in the Nth column fingerprint pixel area can be connected to the first wire 213. The second column of fingerprint pixel circuits in the first column fingerprint pixel area, the second column of fingerprint pixel circuits in the second column fingerprint pixel area,..., and the second column of fingerprint pixel circuits in the Nth column fingerprint pixel area can be connected to the second wire 213. Similarly, the Mth column of fingerprint pixel circuits in the first column fingerprint pixel area, the Mth column of fingerprint pixel circuits in the second column fingerprint pixel area,..., and the Mth column of fingerprint pixel circuits in the Nth column fingerprint pixel area can be connected to the Mth wire 213. In this way, providing one horizontal wire 213 and one vertical wire 214 for each column of fingerprint pixel circuits 211 respectively can be avoided, which is beneficial to reducing the size of the fingerprint sensing layer 210.

Further, in some embodiments, still referring to FIG. 8, a plurality of longitudinal wires 214 are connected to a first interface 215, and the first interface 215 is connected to the signal reading module 230 through a flexible circuit board. Based on the structure of the fingerprint sensing layer 210 shown in FIG. 8, the number of longitudinal wires 214 can be reduced, thereby reducing the size of the first interface 215 and the size of the flexible circuit board, which is beneficial to improving the integration of electronic device.

Further, in some embodiments, still referring to FIG. 8, the fingerprint sensing layer 210 further includes a plurality of groups of row fingerprint pixel areas 216, and each group of row fingerprint pixel areas 216 includes a plurality of rows of the fingerprint pixel circuits. The control module 240 is also configured to: send driving signals to all rows of the fingerprint pixel circuits 211 in a row fingerprint pixel area 216 corresponding to a fingerprint detection area, where the fingerprint detection area is determined by the touch signals; and/or, a number of the groups of column fingerprint pixel areas 212 is equal to a number of the second switch circuits 252, an each column fingerprint pixel area 212 is connected to the common reading circuit 231 through a second switch circuit 252. The control module 240 is configured to control the second switch circuit 252 to connect all columns of the fingerprint pixel circuits 211 in a column fingerprint pixel area 212 corresponding to the fingerprint detection area to the common reading circuit 231, where the fingerprint detection area is determined by the touch signals. It should be noted that the fingerprint detection area is a pressing area formed when a finger presses the touch layer, and is determined based on the touch signals. In some embodiments, by controlling the column fingerprint pixel area 212 and/or the row fingerprint pixel area 216 corresponding to the fingerprint detection area to work instead of driving the entire fingerprint sensing layer 210 to work, it is beneficial to reading the fingerprint signals collected by the pixel circuits 211 efficiently and with low power consumption.

As an example, still referring to FIG. 10, the second switch circuit 252 may be a data selector (multiplexer, Mux). The data selector includes multiple switches. Each switch is a second switch unit 254. The plurality of second switch units 254 of each second switch circuit 252 can be connected to the control module 240 through the CE line in FIG. 10, and the control module 240 sends a driving signal through the CE line to make all the second switch units 254 of the second switch circuit 252 to be simultaneously switched on or off, to further control whether the column fingerprint pixel area 212 connected to the second switch circuit 252 outputs the fingerprint signals. For example, referring to FIGS. 3, 4 and 10 together, each column of the fingerprint pixel circuits 211 is connected to one second switch unit 254.

In some embodiments, the third switch circuit 253 may also include a plurality of third switch units (not shown), and the structure of the third switch circuit 253 is similar to that of the second switch circuit 252. Each column of the touch electrodes 221 is connected to the common reading circuit 231 through a third switch unit; the control module 240 is specifically configured to: control the third switch unit to communicate or not communicate the touch electrodes 221 with the common reading circuit 231 to control whether the reading circuit 231 reads the touch signal. In some embodiments, the touch layer 220 further includes a plurality of rows of the touch electrodes 222, and each row of the touch electrodes 222 may also be connected to the common read circuit 231 through a third switch unit. In this way, the third switch unit is controlled by the control module 240 to control whether each row of the touch electrodes 222 can receive the driving signal.

As an example, the third switch circuit 253 may also be a data selector (Multiplexer, Mux). The data selector includes multiple switches. Each switch serves as a third switch unit, and each switch is connected to a column of the touch electrodes 221 or a row of the touch electrodes 222, and the control module 240 can control any third switch unit to be switched on or off.

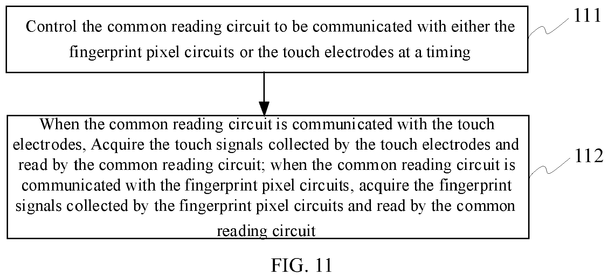

FIG. 11 is a block diagram of a signal acquiring method according to an exemplary embodiment of the present disclosure. Some embodiments of the present disclosure also provide a signal acquiring method for an electronic device. The electronic device includes: a fingerprint sensing layer, a touch layer, and a signal reading module; the touch layer includes a plurality of columns of touch electrodes; the fingerprint sensing layer includes a plurality of columns of fingerprint pixel circuits; the signal reading module includes a plurality of common reading circuits, at least one column of the touch electrodes and at least one column of the fingerprint pixel circuits are connected to a same common reading circuit. Referring to FIG. 11, the signal acquiring method includes Step 111 and Step 112.

At Step 111: the common reading circuit is controlled to be communicated with either the fingerprint pixel circuits or the touch electrodes at a timing.

In some embodiments, the electronic device further includes: a switch module connected to the touch electrodes, the fingerprint pixel circuits, and the common reading circuit. Step 111 includes Step 1111 and Step 1112.

At Step 1111, the switch module is controlled to communicate the common reading circuit with the touch electrodes, but not the fingerprint pixel circuits.

At Step 1112, the switch module is controlled to communicate the common reading circuit with the fingerprint pixel circuits but not the touch electrodes.

In some embodiments, Step 1111 is performed to acquire the touch signal read by the common reading circuit. Step 1112 is performed to acquire the fingerprint signal read by the common reading circuit.

Further, in some embodiments, the switch module includes a plurality of first switch units, and each first switch unit includes a first connection terminal, a second connection terminal, and a third connection terminal. The first connection terminal is connected to one of the touch electrodes, and the second connection terminal is connected to one of the fingerprint pixel circuits. Step 111 and Step 112 include:
controlling the third connection terminal to be connected with one of the first connection terminal and the second connection terminal and disconnected with another of the first connection terminal and the second connection terminal.

In other embodiments, the switch module includes a second switch circuit and a third switch circuit, the second switch circuit is connected between the fingerprint pixel circuits and the common reading circuit, and the third switch circuit is connected between the touch electrodes and the common reading circuits. Step 111 includes Step 1113 and Step 1114.

At Step 1113, the third switch circuit is controlled to communicate the common reading circuit with the touch electrodes, and the second switch circuit is controlled to not communicate the common reading circuit with the fingerprint pixel circuits.

At Step 1114, the third switch circuit is controlled to not communicate the common reading circuit with the touch electrodes, and the second switch circuit is controlled to communicate the common reading circuit with the fingerprint pixel circuits.

In some embodiments, Step 1113 is performed to acquire the touch signals read by the common reading circuit. Step 1114 is performed to acquire the fingerprint signals read by the common reading circuit.

At Step 112, when the common reading circuit is communicated with the touch electrodes, the touch signals collected by the touch electrodes and read by the common reading circuit are acquired; when the common reading circuit is communicated with the fingerprint pixel circuits, the fingerprint signals collected by the fingerprint pixel circuits and read by the common reading circuit are acquired.

In some embodiments, the fingerprint sensing layer further includes a plurality of row fingerprint pixel areas, and each of the row fingerprint pixel areas includes a plurality of rows of fingerprint pixel circuits; and the signal acquiring method provided by the embodiments of the present disclosure further includes:
sending driving signals to each of the rows of fingerprint pixel circuits in one or more of the row fingerprint pixel areas which correspond to a fingerprint detection area determined based on the touch signals; and/or
the fingerprint sensing layer including a plurality of column fingerprint pixel areas, and each column fingerprint pixel area being connected to the common reading circuit through a second switch circuit. Step 111 includes:
controlling the second switch circuit to communicate each of the columns of fingerprint pixel circuits in one or more of the column fingerprint pixel areas which correspond to the fingerprint detection area with the common reading circuit, where the fingerprint detection area is determined based on the touch signals.

In some embodiments, by controlling the column fingerprint pixel area and/or the row fingerprint pixel area corresponding to the fingerprint detection area to work instead of driving the entire fingerprint sensing layer to work, it is beneficial to reading the fingerprint signals collected by the fingerprint pixel circuits efficiently and with low power consumption.

For details of the above method, reference can be made to the description of the corresponding part of the electronic device, which will not be repeated here.

In the signal acquiring method provided by the embodiment of the present disclosure, by controlling the common reading circuit to be connected to either the fingerprint pixel circuits or the touch electrodes at a timing; when the common reading circuit is communicated with the touch electrodes, acquiring the touch signals collected by the touch electrodes and read by the common reading circuit; when the common reading circuit is communicated with the fingerprint pixel circuits, acquiring the fingerprint signals collected by the fingerprint pixel circuits and read by the common reading circuit, when the fingerprint sensing layer is made in an increased size, the number of reading circuits can be reduced, so that the size of the signal reading module can be reduced, the cost of the signal reading module can be lowered, and the integration of electronic device can be improved. Moreover, based on the fact that the fingerprint signals and the touch signals are not acquired by the common reading circuit at the same time, interference between the fingerprint signals and the touch signals can be avoided.

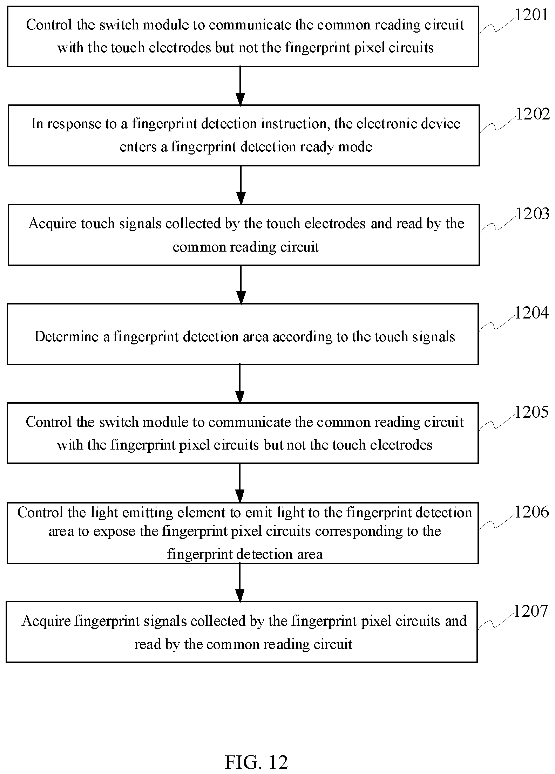

FIG. 12 is a block diagram of a signal acquiring method according to an exemplary embodiment of the present disclosure. Some embodiments of the present disclosure also provide a signal acquiring method for the above-mentioned electronic device. Referring to FIG. 12, the signal acquiring method includes Step 1201 to Step 1207.

At Step 1201, the switch module is controlled to communicate the common reading circuit with the touch electrodes but not the fingerprint pixel circuits.

At Step 1202, in response to a fingerprint detection instruction, the electronic device enters a fingerprint detection ready mode.

In some cases, when a user uses fingerprint detection functions such as payment and unlocking functions of an electronic device, the electronic device may receive the fingerprint detection instruction, and the electronic device may enter the fingerprint detection ready mode to facilitate accurate determination of the fingerprint detection area. For example, in the fingerprint detection ready mode, the electronic device continues to control the touch layer to perform touch detection during a time of two frames, so as to accurately determine the fingerprint detection area.

At Step 1203, touch signals collected by the touch electrodes and read by the common reading circuit are acquired.

Step 1204, a fingerprint detection area is determined according to the touch signals.

In some cases, a position of each touch point can be determined based on the touch signals. For example the position coordinate (x, y) of each touch point is determined, and the fingerprint detection area is determined based on the position coordinates (x, y) of all touch points.

At Step 1205, the switch module is controlled to communicate the common reading circuit with the fingerprint pixel circuits but not the touch electrodes.

At Step 1206, the electronic device further includes a light emitting element, and the light emitting element is controlled to emit light to the fingerprint detection area to expose the fingerprint pixel circuits corresponding to the fingerprint detection area.

As an example, the light emitting element may be a light emitting diode (LED). The electronic device controls the light emitting element to emit light to the fingerprint detection area. The light is reflected by the ridges and valleys of a fingerprint and is received by the fingerprint sensing layer. The fingerprint sensing layer converts the received optical signal into an electrical signal, that is, a fingerprint signal. As such, the fingerprint can be detected according to the fingerprint signal.

Step 1207, fingerprint signals collected by the fingerprint pixel circuits and read by the common reading circuit are acquired.

Regarding Step 1201, Step 1203, Step 1205, and Step 1207, references can be made to the above relevant description, which will not be repeated here. After Step 1207 is performed, Step 1201 may be repeated.

In the signal acquiring method provided by the embodiments of the present disclosure, the switch module is controlled to communicate the common reading circuit with the touch electrodes but not the fingerprint pixel circuits; in response to a fingerprint detection instruction, the electronic device enters a fingerprint detection ready mode; acquire touch signals collected by the touch electrodes and read by the common reading circuit; determine a fingerprint detection area according to the touch signals; control the switch module to communicate the common reading circuit with the fingerprint pixel circuits but not the touch electrodes; the electronic device also includes a light emitting element, and controls the light emitting element to emit light to the fingerprint detection area to expose the fingerprint pixel circuits corresponding to a fingerprint detection area; acquire the fingerprint signals collected by the fingerprint pixel circuits and read by the common reading circuit. In this way, by controlling the switch module, the common reading circuit cannot read the fingerprint signals and the touch signals at a timing, which not only reduces the number of reading circuits, but also reduces the size of the signal reading module and lowers the cost of the signal reading module, and is beneficial to improving the integration of electronic device. In addition, based on the common reading circuit, fingerprint signals and touch signals are not collected at the same time, which can avoid interference between the fingerprint signals and the touch signals.

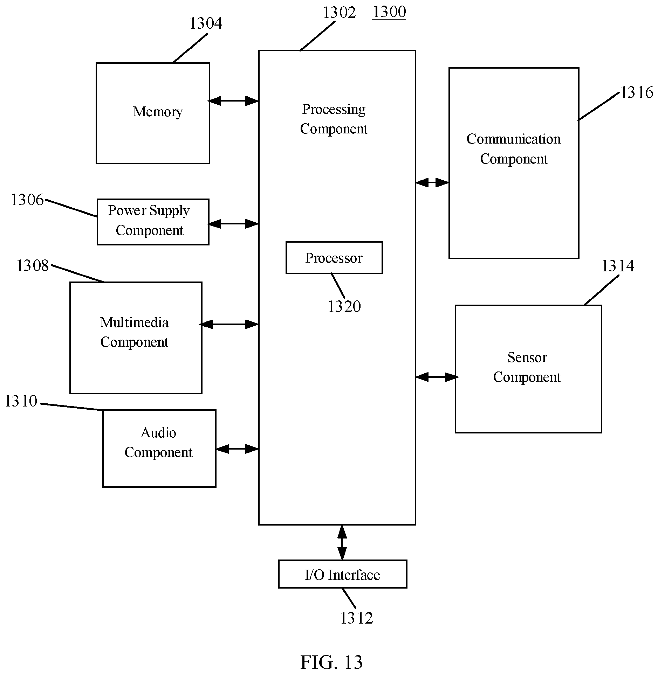

FIG. 13 is a block diagram of an electronic device according to an exemplary embodiment of the present disclosure. For example, the electronic device 1300 may be a smartphone, a computer, a digital broadcasting terminal, a tablet device, a medical device, a fitness device, a personal digital assistant, etc., including a transmitting coil, a first magnetic sensor, and a second magnetic sensor in the device for adjusting the audio parameters of an earphone.

As shown in FIG. 13, the electronic device 1300 may include one or more of the following components: a processing component 1302, a memory 1304, a power supply component 1306, a multimedia component 1308, an audio component 1310, an input/output (I/O) interface 1312, a sensor component 1314, and a communication component 1316.

The processing component 1302 controls overall operations of the electronic device 1300, such as operations associated with display, phone calls, data communications, camera operations, and recording operations. The processing component 1302 may include one or more processors 1320 to execute instructions. In addition, the processing component 1302 may include one or more modules which facilitate the interactions between the processing component 1302 and other components. For example, the processing component 1302 may include a multimedia module to facilitate the interaction between the multimedia component 1308 and the processing component 1302.

The memory 1304 is to store various types of data to support the operations of the electronic device 1300. Examples of such data include instructions for any application or method operated on the electronic device 1300, contact data, phonebook data, messages, pictures, videos, and so on. The memory 1304 can be implemented by any type of volatile or non-volatile storage devices or a combination thereof, such as a static random access Memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or compact disk.

The power supply component 1306 supplies power for various components of the electronic device 1300. The power supply component 1306 may include a power supply management system, one or more power supplies, and other components associated with generating, managing and distributing power for the electronic device 1300.

The multimedia component 1308 includes a screen providing an output interface between the electronic device 1300 and a target object. In some embodiments, the screen may include a liquid crystal display (LCD) screen and a touch panel (TP). If the screen includes the TP, the screen can be implemented as a touch screen to receive input signals from the target object. The TP may include one or more touch sensors to sense touches, swipes, and gestures on the TP. The touch sensors can not only sense a boundary of a touch or swipe, but also sense a duration and a pressure associated with the touch or swipe.

The audio component 1310 is to output and/or input an audio signal. For example, the audio component 1310 includes a microphone (MIC). When the electronic device 1300 is in an operating mode, such as a call mode, a record mode and a voice recognition mode, the microphone is configured to receive an external audio signal. The received audio signal can be further stored in the memory 1304 or sent via the communication component 1316. In some examples, the audio component 1310 further includes a speaker for outputting an audio signal.

The I/O interface 1312 provides an interface between the processing component 1302 and an external interface module. The external interface module may be a keyboard, a click wheel, a button, or the like.

The sensor component 1314 includes one or more sensors to provide state assessments of various aspects for the electronic device 1300. For example, the sensor component 1314 can detect the on/off status of the electronic device 1300, a relative positioning of component such as the component is a display screen and a keypad of the electronic device 1300. The sensor component 1314 can also detect a change in position of the electronic device 1300 or a component of the electronic device 1300, whether a target object is in contact with the electronic device 1300, an orientation or an acceleration/deceleration of the electronic device 1300, and a change in temperature of the electronic device 1300.

The communication component 1316 is configured to facilitate wired or wireless communication between the electronic device 1300 and other devices. The electronic device 1300 can access a wireless network based on a communication standard, such as WiFi, 2nd generation (2G) or 3rd generation (3G), or a combination thereof. In an example, the communication component 1316 receives a broadcast signal or broadcast related information from an external broadcast management system via a broadcast channel. In an example, the communication component 1316 can further include a near field communication (NFC) module for promoting short-range communication. For example, the NFC module can be implemented based on a radio frequency identification (RFID) technology, an infrared data association (IrDA) technology, an ultra-wideband (UWB) technology, a Bluetooth^{®} (BT) technology and other technologies.

In an example, the electronic device 1300 can be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components.

In an example, the electronic device includes: a fingerprint sensing layer, including a plurality of columns of fingerprint pixel circuits; a touch layer, including a plurality of columns of touch electrodes; a signal reading module, including a plurality of common reading circuits, at least one column of the touch electrodes and at least one column of the fingerprint pixel circuit are connected to a same common reading circuit; and one or more processors and memories; the memory storing programs that can be invoked by the processors; wherein, when the processor executes the programs, any of the signal acquiring methods mentioned above is implemented .

In an exemplary embodiment, a computer-readable storage medium storing programs thereon is also provided, and when the program is executed by the processor 1320, any one of the signal acquiring methods mentioned above is implemented. The readable storage medium may be a ROM, a random access memory (RAM), a CD-ROM, a magnetic tape, a floppy disk, an optical data storage device, etc.

For the method embodiment, since it basically corresponds to the electronic device embodiment, reference can be made to the part of the description of the electronic device embodiment for the relevant parts. The method embodiment and the electronic device embodiment are complementary to each other.

The above-mentioned various embodiments of the present disclosure can be complementary to each other without conflict.

It should be noted that in the present disclosure, relational terms such as "first" and "second" are only used to distinguish one entity or operation from another entity or operation, and do not necessarily require that it implies that there is any such actual relationship or order between these entities or operations. The terms "include", "comprise" or any other variants thereof are intended to cover non-exclusive inclusion, so that a process, a method, an article, or a device including a series of elements includes not only those elements, but also other elements not explicitly listed, or also include elements inherent to such processes, method, article, or device. If there are no more restrictions, the element defined by the sentence "including a..." does not exclude the existence of other same elements in the process, method, article, or device that includes the element.

The method and apparatus provided by the embodiments of the present disclosure are described in detail above. Specific examples are used in the present disclosure to illustrate the principles and implementations of the present disclosure. The descriptions of the above embodiments are only used to help understand the method and its core idea of the present disclosure. Moreover, for those skilled in the art, according to the idea of the present disclosure, there will be changes in the specific implementation and the scope of application. Accordingly, the content of this specification should not be construed as limitation on the present disclosure.

The content disclosed in this patent document contains copyrighted material. The copyright belongs to the copyright owner. The copyright owner does not object to anyone copying the patent document or the patent disclosure in the official records and archives of the Patent and Trademark Office.

## Claims

1. An electronic device, comprising:
a fingerprint sensing layer comprising a plurality of columns of fingerprint pixel circuits;
a touch layer comprising a plurality of columns of touch electrodes;
a signal reading module comprising a plurality of common reading circuits, wherein, each of the common reading circuits is connected to at least one column of the touch electrodes and at least one column of the fingerprint pixel circuits; and
a control module configured to
control the common reading circuits to be communicated with either the fingerprint pixel circuits or the touch electrodes at a timing;
when the common reading circuit is communicated with the touch electrodes, acquire a touch signal which is collected by the touch electrodes and read by the common reading circuit; and
when the common reading circuit is communicated with the fingerprint pixel circuits, acquire a fingerprint signal which is collected by the fingerprint pixel circuits and read by the common reading circuit.

2. The electronic device according to claim 1, further comprising:
a switch module connected to the touch electrodes, the fingerprint pixel circuits, and the common reading circuits;
wherein the control module is configured to
control the switch module to communicate the common reading circuits with the touch electrodes but not the fingerprint pixel circuits; or
control the switch module to communicate the common reading circuits with the fingerprint pixel circuits but not the touch electrodes.

3. The electronic device according to claim 2, wherein
the switch module comprises a plurality of first switch units, and each of the first switch units comprises
a first connection terminal connected to one of the touch electrodes,
a second connection terminal connected to one of the fingerprint pixel circuits, and
a third connection terminal connected to one of the common reading circuits;
the control module is configured to control the third connection terminal to be
connected with one of the first connection terminal and the second connection terminal and
disconnected with another of the first connection terminal and the second connection terminal.

4. The electronic device according to claim 3, wherein the first switch units are integrated with the signal reading module.

5. The electronic device according to claim 2, wherein
the switch module comprises
a second switch circuit connected between the fingerprint pixel circuits and the common reading circuits, and
a third switch circuit connected between the touch electrodes and the common reading circuits;
the control module is configured to
control the third switch circuit to communicate the common read circuits with the touch electrodes, but the second switch circuit to not communicate the common read circuit with the fingerprint pixel circuits; or
control the third switch circuit to not communicate the common reading circuit with the touch electrodes, but the second switch circuit to communicate the common reading circuit with the fingerprint pixel circuits.

6. The electronic device according to claim 5, wherein
the fingerprint sensing layer comprises a plurality of column fingerprint pixel areas, a plurality of horizontal wires and a plurality of vertical wires,
the second switch circuit comprises a plurality of second switch units;
for each of the column fingerprint pixel areas,
the column fingerprint pixel area comprises a plurality of columns of fingerprint pixel circuits, and
each of the columns of fingerprint pixel circuits is connected to one of the horizontal wires through one of the second switch units,
for a group comprising at least two of the column fingerprint pixel areas, one column of the fingerprint pixel circuits in every column fingerprint pixel areas within the group are connected to a same one of the horizontal wires, and
each of the horizontal wires is connected to the common reading circuits through one of the vertical wires.

7. The electronic device according to claim 5, wherein
the fingerprint sensing layer further comprises a plurality of row fingerprint pixel areas, each of the row fingerprint pixel areas comprises a plurality of rows of fingerprint pixel circuits, and the control module is further configured to
send a driving signal to each of the rows of fingerprint pixel circuits in one or more of the row fingerprint pixel areas which correspond to a fingerprint detection area determined based on the touch signals; and/or,
a number of the row fingerprint pixel areas is equal to a number of the second switch circuits, each of the row fingerprint pixel areas is connected to the common reading circuit through one of the second switch circuits, and the control module is configured to
control the second switch circuit to communicate each of the rows of fingerprint pixel circuits in one or more of the row fingerprint pixel areas which correspond to the fingerprint detection area with the common reading circuit, wherein the fingerprint detection area is determined based on the touch signals.

8. The electronic device according to claim 5, wherein
the second switch circuit and the signal reading module are separately provided; and/or,
the third switch circuit and the signal reading module are separately provided.

9. A signal acquiring method, applied in an electronic device, the electronic device comprising: a fingerprint sensing layer, a touch layer, and a signal reading module; the touch layer comprising a plurality of columns of touch electrodes; the fingerprint sensing layer comprising a plurality of columns of fingerprint pixel circuits; the signal reading module comprising a plurality of common reading circuits, wherein, each of the common reading circuits is connected to at least one column of the touch electrodes and at least one column of the fingerprint pixel circuits, and the method comprising:
controlling the common reading circuits to be communicated with either the fingerprint pixel circuits or the touch electrodes at a timing; and
when the common reading circuit is communicated with the touch electrodes, acquire a touch signal which is collected by the touch electrodes and read by the common reading circuit; and when the common reading circuit is communicated with the fingerprint pixel circuits, acquire a fingerprint signal which is collected by the fingerprint pixel circuits and read by the common reading circuit.

10. The method according to claim 9, wherein the electronic device further comprises: a switch module connected to the touch electrodes, the fingerprint pixel circuits, and the common reading circuits; and controlling the common reading circuit to be communicated with either the fingerprint pixel circuits or the touch electrodes at a timing comprises:
controlling the switch module to communicate the common reading circuits with the touch electrodes but not the fingerprint pixel circuits; or
controlling the switch module to communicate the common reading circuits with the fingerprint pixel circuits but not the touch electrodes.

11. The method according to claim 10, wherein the switch module comprises a plurality of first switch units, and each of the first switch units comprises a first connection terminal connected to one of the touch electrodes, a second connection terminal connected to one of the fingerprint pixel circuits, and a third connection terminal connected to one of the common reading circuits; and controlling the common reading circuit to be communicated with either the fingerprint pixel circuits or the touch electrodes at a timing comprises:
controlling the third connection terminal to be connected with one of the first connection terminal and the second connection terminal, and disconnected with another of the first connection terminal and the second connection terminal.

12. The method according to claim 10, wherein the switch module comprises a second switch circuit connected between the fingerprint pixel circuits and the common reading circuits, and a third switch circuit connected between the touch electrodes and the common reading circuits; and controlling the common reading circuit to be communicated with either the fingerprint pixel circuits or the touch electrodes at a timing comprises:
controlling the third switch circuit to connect the common read circuits to the touch electrodes, but the second switch circuit to disconnect the common read circuit from the fingerprint pixel circuits; or
controlling the third switch circuit to disconnect the common reading circuit from the touch electrodes, but the second switch circuit to connect the common reading circuit to the fingerprint pixel circuits.

13. The method according to claim 12, wherein the fingerprint sensing layer further comprises a plurality of row fingerprint pixel areas, each group of the row fingerprint pixel areas comprises a plurality of rows of fingerprint pixel circuits, and the method further comprises:
sending a driving signal to each of the rows of fingerprint pixel circuits in one or more of the row fingerprint pixel areas which correspond to a fingerprint detection area determined based on the touch signals; and/or,
the fingerprint sensing layer comprises a plurality of column fingerprint pixel areas, each of the column fingerprint pixel areas is connected to the common reading circuit through one of the second switch circuits, and controlling the common reading circuit to be communicated with either the fingerprint pixel circuits or the touch electrodes at a timing comprises:
controlling the second switch circuit to communicate each of the columns of fingerprint pixel circuits in one or more of the column fingerprint pixel areas which correspond to the fingerprint detection area with the common reading circuit, wherein the fingerprint detection area is determined based on the touch signals.

14. The method according to claim 10, wherein after acquiring the touch signals collected by the touch electrodes and read by the common reading circuit, the method further comprises:
in response to a fingerprint detection instruction, the electronic device entering a fingerprint detection ready mode.

15. The method according to claim 10, wherein after acquiring the touch signals collected by the touch electrodes and read by the common reading circuit, the method further comprises:
determining the fingerprint detection area according to the touch signals.

16. The method according to claim 15, wherein the electronic device further comprises a light emitting element, and after controlling the switch module to disconnect the common reading circuit from the touch electrodes, and controlling the switch module to connect the common reading circuit to the fingerprint pixel circuits, the method further comprises:
controlling a light emitting element to emit light to the fingerprint detection area to expose the fingerprint pixel circuits corresponding to a fingerprint detection area.

17. The method according to claim 10, wherein after acquiring the fingerprint signals collected by the fingerprint pixel circuits and read by the common reading circuit, the method further comprises:
controlling the switch module to communicate the common reading circuit with the touch electrodes but not the fingerprint pixel circuits.

18. An electronic device, comprising:
a fingerprint sensing layer comprising a plurality of columns of fingerprint pixel circuits;
a touch layer comprising a plurality of columns of touch electrodes;
a signal reading module comprising a plurality of common reading circuits, wherein, each of the common reading circuits is connected to at least one column of the touch electrodes and at least one column of the fingerprint pixel circuits; and
one or more processors and memories, the memory storing a program that can be invoked by the processors; wherein when the processors execute the program, the processors implement the method according to any one of claims 9-17.

19. A computer-readable storage medium having a program stored thereon, and when a processor executes the program, the processor implements the method according to any one of claims 9-17.
